# EUROPEAN PATENT APPLICATION

(11) **EP 3 050 441 A1**
(43) Date of publication of application: **03.08.2016**
(21) Application number: 15153045.8
(22) Date of filing: 29.01.2015
(51) Int. Cl.: A24D 3/02

(54) **APPARATUS TO MANUFACTURE ROD-LIKE ARTICLES USED IN PRODUCTS OF THE TOBACCO INDUSTRY AND TRANSPORT UNIT TO TRANSFER STREAM OF ROD-LIKE ARTICLES**

(71) Applicant: International Tobacco Machinery Poland Sp. z o.o., 26-600 Radom (PL)
(72) Inventor: Cieslikowski, Bartosz, 26-600 Radom (PL)
(74) Representative: Markieta, Jaroslaw Franciszek

(57) **Abstract**

The object of the application is an apparatus for the manufacturing of multi-segment rods comprising a feeder (2) delivering rod-like elements (S1, S2) in the form of a rod-like elements train (ST1); a wrapping device (6) situated downstream of the feeder (2) in the direction of movement of the elements train (ST1), for wrapping a rod-like elements train (ST2) into the wrapping material (7) thereby forming a continuous rod (CR); a conveying unit (1) disposed between the feeder (2) and the wrapping unit (6) for the formation of the train (ST2) of axially positioned rod-like elements (S1, S2) and for transferring rod-like elements (S1, S2) by means of a number of conveying wheels (9, 10, 11) to the wrapping unit (6), whereas the rod-like elements are moved along guides (20, 21, 22), as well as cutting means (8) used for cutting the continuous rod (CR) into rods (R), each containing a set of rod-like elements (S1, S2), characterised in that at least the last of the wheels (11) in the unit (1) conveying the rod-like elements (S1, S2) to the wrapping device (6) is a wheel whose circumferential surface (11A) is smooth.

## Description

The object of the invention is an apparatus for the manufacturing of multi-segment rods in the tobacco industry products, and a conveying unit for the transferring of a rod-like elements train.

This invention relates to the transferring of rod-like elements among conveying devices of the tobacco industry machines, whereas rod-like elements are to be understood in this document as among others tobacco segments, tobacco rods, filter segments, filter rods, multi-segment filter rods containing filter segments and additional components varying the elements' flavour or giving it to them, multi-segment filter rods containing filter segments and additional objects varying the filtering properties of filter materials used, multi-segment rods containing both filter and non-filter segments, multi-segment elements with reduced tobacco content as well as cigarettes with a stuck-on single-segment or multi-segment filter tip. Furthermore, rod-like elements may be both cylindrical and non-cylindrical, and may have undercuts or hollows in both frontal and circumferential surfaces.

It is common in the tobacco industry to put rod-like elements together in groups with a finite number of elements or endless trains of alternately different or the same elements. Furthermore, these may be non-filter and filter elements with different filtering properties or alternately non-filter, filter elements and tobacco rods. Continuous elements trains are wrapped into the paper wrapper forming a continuous rod and are subjected to further processing, whereas they are first cut into rods with a repeatable component sequence.

The tobacco industry manufacturers have expressed the demand for the rod-like elements to be put together without gaps between elements or with precisely defined gaps.

A difficult and very significant problem in case of putting the elements without gaps is to meet the expectation that the rod-like elements be pushed close to one another, generally placed next to one another, in a repeatable way. The feeding in a repeatable way is to be understood as placing the elements in such a way which eliminates the influence of random factors on the final position of the elements in the elements train. An undesirable effect which may be caused by random factors is the formation of random gaps between the elements or an excessive compression of the elements causing a deformation of the elements, which influences the quality of finished products.

As regards putting rod-like elements trains together, devices for the transferring of rod-like elements among rod-like elements conveying devices for the lengthwise conveyance of such elements are known in the prior art.

From the EP 1 763 306 B1 document, for example, a device for the transferring of groups of rod-like elements, in this case filter segments, and the formation of an endless elements train is known. During the transferring of elements, gaps among individual elements groups are maintained because they are necessary for the correct transfer of rod-like elements among successive rotational members in the form of wheels provided with lugs on the circumference, whereas the groups of rod-like elements are placed in spaces between the lugs. In order to form a rod-like elements train on a belt downstream of the transferring device, in which there are no gaps, the transferring belt moves with a smaller speed than the circumferential speed of the last wheel of the transferring device. During the transfer of rod-like elements onto the belt, due to a speed difference the friction between the elements and the belt occurs. As a result, rod-like elements arranged on the belt are not arranged in a repeatable way, may be excessively compressed, or random gaps among the elements may be formed.

The WO 2010/076653 document has also presented a device for the transferring of the elements groups between two conveying devices. The document has disclosed a method for the elimination of gaps among elements groups which remain after the separating members between the notches on the transferring wheels. It takes place by selecting the speed of the conveyor belt of the conveying device receiving the elements groups. The speed of this belt is smaller than the circumferential speed of the wheel so that the elements delivered by the last transferring wheel are pushed close to the elements delivered before. The elements are moved along the paper wrapper moving with the belt speed. The glue which is usually applied on the paper wrapper may hinder the movement of elements and accumulate among the elements. It happens that the paper wrapper of moved elements is improperly stuck on, which may influence the correctness of the final position of the moved group and the repeatability of location of adjoining elements from successive elements groups relative to one another.

The object of this invention is to develop an improved apparatus for the transferring of rod-like elements among the conveying devices, where the said apparatus will make it possible to deliver the rod-like elements to the exit conveying device in such a way that the displacement of the elements relative to the paper wrapper will be reduced or eliminated.

The substance of the invention is the apparatus for the manufacturing of multi-segment rods, comprising: a feeder delivering the rod-like elements in the form of a rod-like elements train; a wrapping device situated downstream of the feeder in the direction of movement of the elements train, for the wrapping of the rod-like elements train into a wrapping material thereby forming a continuous rod; a conveying unit situated between the feeder and the wrapping unit, for the formation of a train of axially positioned rod-like elements and for the transferring rod-like elements by means of a number of conveying wheels to the wrapping device, whereas the rod-like elements are moved along guides. An apparatus according to the invention also comprises cutting means used for the cutting the continuous rod into rods, whereas each of the rods comprises a set of rod-like elements. An apparatus according to the invention is characterised in that at least the last of the wheels in the unit conveying the rod-like elements to the wrapping device is a wheel whose circumferential surface is smooth.

Furthermore, an apparatus according to the invention is characterised in that the conveying unit is adapted to the variation of the relative position of rod-like elements between one another in axial direction.

Furthermore, an apparatus according to the invention is characterised in that the conveying unit is adapted to the variation of the distance between rod-like elements.

Furthermore, an apparatus according to the invention is characterised in that the smooth wheel has a smaller diameter than the other wheels of the assembling unit.

Furthermore, an apparatus according to the invention is characterised in that the wheels of the conveying unit and the guides are made of materials selected depending on the material of which the outside coating of conveyed rod-like elements was made so that the coefficient of friction of rod-like articles relative to the circumferential surface of the wheels is smaller than the coefficient of friction of rod-like elements relative to the guiding surface of the guides.

The substance of the invention is also a conveying unit for the transferring a rod-like elements train in the tobacco industry having an inlet for receiving the rod-like elements train, a number of conveying wheels, a number of guides for guiding of rod-like elements, an outlet for transferring the rod-like elements train. A unit according to the invention is characterised in that at least the last of the wheels in the conveying unit is a wheel whose circumferential surface is smooth.

Furthermore, a unit according to the invention is characterised in that the unit is adapted to the variation of the relative position of rod-like elements between one another in the axial direction.

The application of the last smooth wheel resulted in an increase of the quality of manufactured rods. One of the quality parameters is that the length of the halves of cut segments is within a narrow tolerance range. Due to the reduction of stresses occurring during the transfer of segments onto the segment train receiving conveyor, an increased accuracy of rod cutting was noticed. Furthermore, the absence of lugs on the last wheel eliminates the risk of tearing the segments off the conveyor and improper positioning of the segments relative to adjoining segments.

The object of the invention was presented in detail in a preferred embodiment in a drawing in which:
Fig. 1 shows an embodiment of a rod-like elements train;
Fig. 2 shows another embodiment of the rod-like elements train;
Fig. 3 shows a fragment of a machine for the manufacturing of multi-segment rods; and
Fig. 4 shows a conveying unit of the rod-like elements train.

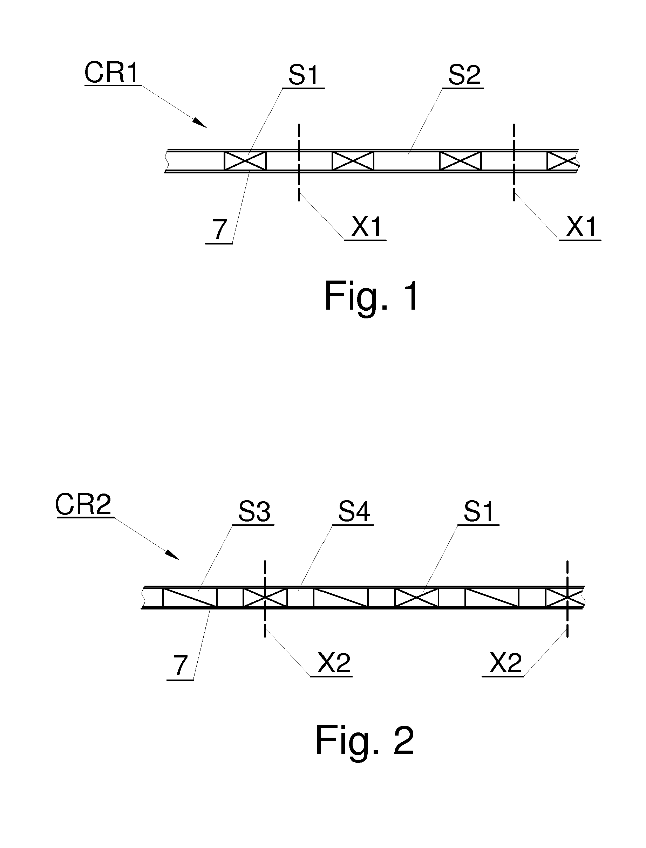

Fig. 1 and 2 show the fragments of embodiments of continuous multi-segment rods CR1 and CR2 formed of rod-like elements trains prepared during the production, S1, S2, S3 and S4, respectively, manufactured as a result of the operation of the apparatus according to the invention. Presented continuous rods are cut into multi-segment rods, Fig. 1 and 2 show with the broken lines X1 and X2 the examples of cutting points at the continuous rods. The distance between successive lines X1, X2, respectively, shows the length of manufactured rods.

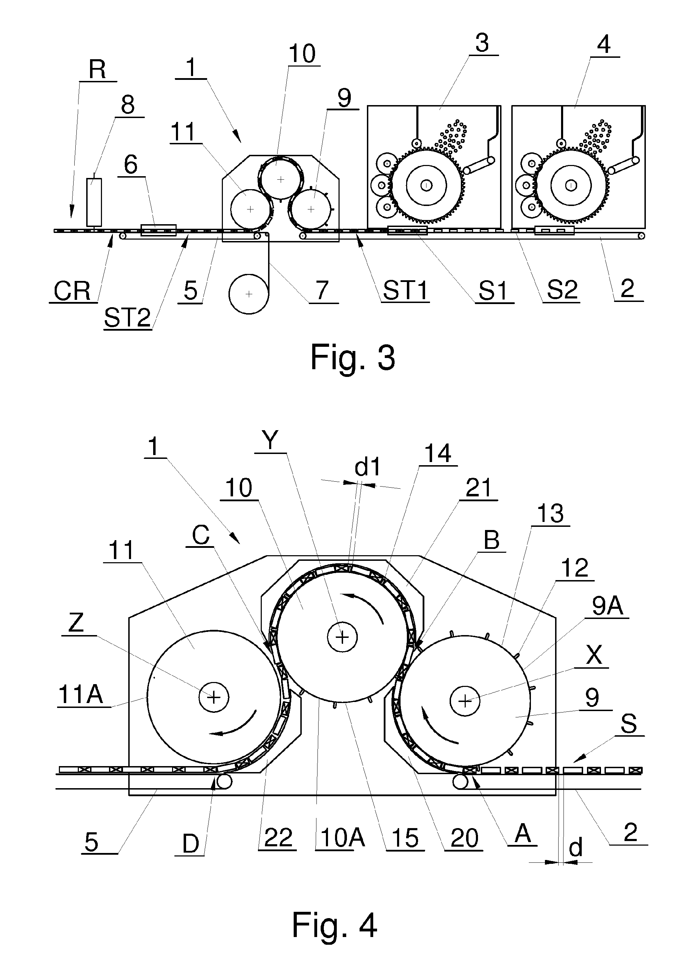

Fig. 3 shows a fragment of the machine for the manufacturing of multi-element filter rods. The machine has feeding units 3 and 4 for the delivery of rod-like elements S1 and S2 onto the feeder 2 (generally a conveying device). The machine has a conveying unit 1 according to the invention whose task is to transfer the rod-like elements S1, S2 delivered by the feeder 2 from the feeding units 3 and 4 in the form of the train ST1, whereas the elements S1, S2 move at certain intervals to one another i.e. are not in contact with one another. The conveying unit 1 is provided with three wheels 9, 10, 11, whereas the wheel 9 receives the elements S1, S2 from the feeder 2 in the form of the elements train ST1. The wheel 11 delivers the transferred rod-like elements S1, S2 onto the formatting conveyor 5, whereas the wrapping material 7 is delivered onto the belt of the formatting conveyor 5, and the elements S1, S2 are placed onto the wrapping material 7. The elements S1 and S2 received by the formatting conveyor 5 form the train ST2 of rod-like elements S2, whereas these elements are arranged in such a way that successive elements keep the contact with one another. The train ST2 of rod-like elements S1 and S2 moving on the belt of the formatting conveyor 5 is wrapped into the wrapping material 7 by means of the formatting device 6. The formatting conveyor 5 is usually a part of the formatting device 6. The manufactured continuous rod CR moves further and is cut by means of a cutting head 8 into individual multi-segment rods R.

As shown in Fig. 4, the elements S1, S2 are transferred in the area A from the feeder 2 onto the wheel 9, whereas the area A constitutes the inlet of the conveying unit 1. In the area B, the elements S1, S2 are transferred from the wheel 9 to the wheel 10, respectively in the area C the elements are transferred from the wheel 10 to the wheel 11, and in the area D from the wheel 11 onto the formatting conveyor 5, whereas the area D constitutes the outlet of the conveying unit. The wheel 9 rotating around the axis of rotation X is provided with circumferentially disposed lugs 12 with a thickness smaller than the distances d among the elements S1 and S2 on the feeder 2. In addition, the elements S1, S2 in one elements group conveyed in the notches 13 between adjoining lugs 12 on the circumferential surface 9A may be in contact with one another. The lugs 14 on the circumferential surface 10A of the wheel 10 rotating around the axis of rotation Y have a thickness close to the lugs 12 on the wheel 9, similarly the notches 15 on the wheel 10 have a length close to the notches 13. The wheel 11 rotating around the axis of rotation Z has a smooth circumferential surface 11A without any lugs. On the path between the areas C and D the intervals between successive rod-like elements S1, S2 in the axial direction gradually decrease, and the speed of the elements decreases so that their speed finally comes close to the speed of the belt of the formatting conveyor 5 or equals this speed. The distances d1 between successive elements groups S1, S2 are reduced or completely eliminated. Generally, the rod-like elements S1, S2 are transferred from the outlet of the conveying unit 1 at smaller intervals than they are delivered at the inlet. After the transfer from the outlet, the rod-like elements S2, ST2 move further in the train ST2 on the belt of the formatting conveyor 5 and the wrapping material 7.

The elimination of the lugs from the wheel 11 has a favourable influence on the improvement of the process of transferring of rod-like elements S1, S2 from the wheel 11 onto the wrapping material 7. In the prior art, there is a problem related to the exit of the lug of the last wheel from among the rod-like elements which are placed onto the wrapping material 7. The presence of the lug on the last wheel caused the occurrence of stresses and displacements of segments in the situation when the lug was leaving the space among rod-like elements placed onto the wrapping material 7 which are pressed against one another. The rod-like elements in the transition area are namely pressed against one another due to the occurrence of the difference between the circumferential speed of the wheel 11 and the movement speed of the wrapping material 7, with the wrapping material having a smaller speed. Furthermore, a problem was noticed which consisted in that the lug on the last wheel tore the rod-like element moving before it off the conveyor, which caused the risk of improper i.e. misaligned arrangement of successive segments, which disturbed the production process.

Furthermore, the elimination of the lugs resulted in further advantageous effects related to the reduction of stresses occurring among successive rod-like elements moving in groups already on the circumferential surface 11A of the wheel 11. Namely a decrease in the speed of successive rod-like elements resulting precisely in the reduction of stresses among rod-like elements being in contact with one another was noticed. The slowing down effect may also be achieved by using a wheel with a reduced diameter.

The rod-like elements S1, S2 move on a path being a composition of three arches and are guided by the guides 20, 21 and 22 which, together with the circumferential surfaces 9A, 10A, 11A of the wheels 9, 10 and 11, respectively, are forming the channels for the elements S1, S2. The apparatus is additionally provided with not shown guides parallel to the plane of the drawing, situated before and behind the surface of the wheels 9, 10 and 11. The material of the wheels 9, 10, 11 of the conveying unit 1 and the guides 20, 21, 22 may be selected depending on the wrapping material of which the outside coating of conveyed rod-like elements S1, S2 has been made. These may be different materials provided that the coefficient of friction of rod-like elements S1, S2 relative to the circumferential surface 9A, 10A, 11A of the wheels 9, 10, 11, respectively, is smaller than the coefficient of friction of rod-like elements relative to the guiding surface of the guides 20, 21, 22. For example, for typical materials used in the tobacco industry, the wheels and the guides may be made of different grades of stainless steel or tool steel, may have hard coatings made for example of tungsten carbide or titanium or chromium nitride. It is also possible to use plastics approved for the contact with food products.

## Claims

1. An apparatus for manufacturing of multi-segment rods comprising
a feeder (2) delivering rod-like elements (S1, S2) in the form of a rod-like elements train (ST1);
a wrapping device (6) situated downstream of the feeder (2) in the direction of movement of the elements train (ST1), for wrapping the rod-like elements train (S1, S2) in a wrapping material (7) thereby forming a continuous rod (CR);
a conveying unit (1) disposed between the feeder (2) and the wrapping unit (6) for the formation of a train (ST2) of axially positioned rod-like elements (S1, S2) and for transferring of rod-like elements (S1, S2) by means of a number of conveying wheels (9, 10, 11) to the wrapping device, whereas rod-like elements are transferred along guides (20, 21, 22), as well as
a cutting means (8) used for cutting the continuous rod (CR) into rods (R), each containing a set of rod-like elements (S1, S2),
**characterised in that** at least the last of the wheels (11) in the unit conveying the rod-like elements (S1, S2) to the wrapping device (6) is a wheel whose circumferential surface is smooth.

2. An apparatus as in claim 1 **characterised in that** the conveying unit (1) is adapted to the variation of the relative position of rod-like elements (S1, S2) between one another in axial direction.

3. An apparatus as in claim 1 or 2 **characterised in that** the conveying unit (1) is adapted to the variation of the distance between rod-like elements (S1, S2).

4. An apparatus as in any of the previous claims **characterised in that** the smooth wheel (11) has a smaller diameter than the other wheels of the assembling unit (1).

5. An apparatus as in any of the previous claims **characterised in that** the wheels (9, 10, 11) of the conveying unit (1) and the guides (20, 21, 22) are made of materials selected depending on the material of which the outside coating of conveyed rod-like elements (S1, S2) was made so that the coefficient of friction of rod-like elements (S1, S2) relative to the circumferential surface (9A, 10A, 11A) of the wheels (9, 10, 11) is smaller than the coefficient of friction of rod-like elements (S1, S2) relative to the guiding surface of the guides (20, 21, 22).

6. A conveying unit for transferring a train of rod-like elements (S1, S2) in the tobacco industry having an inlet for receiving rod-like elements (S1, S2) train, a number of conveying wheels (9, 10, 11), a number of guides for guiding rod-like elements, an outlet for transferring the rod-like elements train **characterised in that** the last of the wheels (11) in the conveying unit (1) is a wheel whose circumferential surface (11A) is smooth.

7. A unit as in claim 6 **characterised in that** the unit is adapted to the variation of relative position of rod-like elements (S1, S2) between one another in axial direction.
